Europäisches Patentamt

**European Patent Office**

**Office européen des brevets**

(11) Veröffentlichungsnummer: **0 424 784 A2**

(12) **EUROPÄISCHE PATENTANMELDUNG**

(21) Anmeldenummer: 90119825.9

(51) Int. Cl.5: **B60G 17/015, B60G 17/056**

(22) Anmeldetag: **16.10.90**

(30) Priorität: **26.10.89 DE 3935595**

(43) Veröffentlichungstag der Anmeldung:
**02.05.91 Patentblatt 91/18**

(84) Benannte Vertragsstaaten:
**DE ES FR GB IT**

(71) Anmelder: **VOLKSWAGEN AKTIENGESELLSCHAFT**

**W-3180 Wolfsburg(DE)**

(72) Erfinder: **Steinkopff, Karl-Heinz, Dipl.-Ing.
Hamelnweg 5
W-3300 Braunschweig(DE)**
Erfinder: **Oehlerking, Conrad, Dipl.-Ing.
Klintweg 11
W-3174 Wedelheine(DE)**
Erfinder: **Hoffmann, Günter
Keramikweg 5
W-3170 Gifhorn(DE)**

(54) **Hydraulische Stelleinrichtung zur Erzeugung einer nach Richtung und Grösse steuerbaren Stellkraft.**

(57) Die Erfindung betrifft eine hydraulische Stelleinrichtung zur Erzeugung einer nach Richtung und Größe steuerbaren Stellkraft. Sie enthält ein hydraulisches Zweirichtungs-Stellglied mit einem beidseitig druckbeaufschlagbaren verschieblichen Stellkolben, der zwei hydraulische Arbeitskammern voneinander trennt, die andererseits durch einen Stellrichtung sowie Stellkraft des Stellkolbens steuernden Hydraulikkreis mit Hydraulikpumpe, Hydrauliktank und steuerbarer Ventileinrichtung miteinander verbunden sind. Der Hydraulikkreis ist dabei als offener Kreis mit ständig fördernder Hydraulikpumpe ausgebildet und die steuerbare Ventileinrichtung weist steuerbare Drosselventile auf, deren Durchflußquerschnitte jeweils zwischen einem von Null verschiedenen Mindestwert und einem Höchstwert verstellbar sind.

# HYDRAULISCHE STELLEINRICHTUNG ZUR ERZEUGUNG EINER NACH RICHTUNG UND GRÖSSE STEUER-BAREN STELLKRAFT

Die Erfindung bezieht sich auf eine hydraulische Stelleinrichtung zur Erzeugung einer nach Richtung und Größe steuerbaren Stellkraft der im Oberbegriff des Patentanspruchs 1 genannten Art.

Derartige hydraulische Stelleinrichtungen sind in unterschiedlichen Ausführungen bekannt (z. B. DE-OS 27 38 455, DE-OS 37 05 520, DE-OS 37 40 244, DE-OS 37 42 883) und werden beispielsweise in der Kraftfahrzeugtechnik eingesetzt, um im Rahmen der Fahrzeugabfederung z. B. das Dämpfungs- und/oder Federungsverhalten des Fahrzeugs oder auch die Lage des Fahrzeugaufbaus, z. B. Wankausgleich beim Durchfahren von Kurven und/oder Nickausgleich beim Bremsen und/oder Beschleunigen, in einem das allgemeine Fahrverhalten und/oder den Fahrkomfort verbessernden Sinne zu beeinflussen.

Aus der DE-OS 27 38 455 ist beispielsweise ein Verfahren und eine Vorrichtung zu einer aktiven Schwingungsdämpfung an den Rädern von Kraftfahrzeugen bekannt. Hierbei sind den einzelnen Rädern jeweils zwischen Fahrzeugaufbau und Radführungsglied bzw. Radträger wirksame hydraulische Zweirichtungs-Stellglieder zugeordnet, die als Stellzylinder mit axial verschieblichem Stellkolben ausgebildet sind. Zur Durchführung einer aktiven Schwingungsdämpfung sind die durch den Stellkolben voneinander getrennten beiden Zylinderräume miteinander über einen geschlossenen Hydraulikkreis verbunden, der im wesentlichen eine Hydraulikpumpe, einen drucklosen Hydraulikvorratsbehälter sowie eine von einer Regeleinrichtung steuerbare elektromagnetische Umschalt- und Sperrventileinrichtung enthält. Durch diese elektromagnetische Ventileinrichtung können die beiden Zylinderräume nach Bedarf nach außen völlig abgesperrt werden oder - jeweils gegensinnig - entweder mit der Hydraulikpumpe oder dem Hydraulikvorratsbehälter verbunden werden. Auf diese Weise können nach Bedarf Stellkräfte in die eine oder die andere Richtung erzeugt werden. Die Hydraulikpumpe fördert dabei immer nur dann, wenn durch die Ventileinrichtung eine Leitungsverbindung zu den Zylinderräumen des Stellzylinders hergestellt ist.

Auch bei dem aus der DE-OS 37 42 883 bekannten aktiven Dämpfungs-bzw. Federungssystem sind die beiden durch einen Stellkolben voneinander getrennten Zylinderräume eines hydraulischen Zweirichtungs-Stellzylinders über einen eine elektromagnetische Umschalt- bzw. Sperrventileinrichtung, einen drucklosen Hydraulikvorratsbehälter sowie eine Hydraulikpumpe und einen Druckspeicher enthaltenden geschlossenen Hydraulikkreis miteinander verbunden. Die Druckbeaufschlagung der beiden Zylinderräume erfolgt dabei aus dem Druckspeicher, der nach Entladung resp. Teilentladung durch die Hydraulikpumpe wieder aufgeladen wird.

Aus der DE-PS 11 05 290 sowie dem Zusatz dazu, der DE-PS 11 75 093, sind auch bereits Radaufhängungen für Kraftfahrzeuge bekannt, bei denen die Neigung des Fahrzeugaufbaus etc. beeinflussende Stellkräfte nicht unmittelbar über den einzelnen Fahrzeugrädern zugeordnete Stelleinrichtungen, sondern mittelbar über einen Stabilisator zur Wirkung gebracht werden, der durch eine Stelleinrichtung verdreht wird. Zur diesem Zweck ist jeweils ein etwa mittig aufgetrennter U-Form-Stabilisator vorgesehen, dessen beiden Drehstabteile an der Trenn- bzw. Verbindungsstelle durch ein hydraulisches Zweirichtungs-Stellglied in die eine oder in die andere Richtung gegeneinander verdrehbar sind, je nach dem, in welcher Richtung kompensierende Stellkräfte zur Wirkung gebracht werden sollen. Als hydrauli sches Zweirichtungs-Stellglied ist dabei entweder ein Stellmotor mit Drehkolben oder eine Kolben-Zylinder-Einheit mit linear beweglichem Stellkolben vorgesehen. Die durch den Drehkolben bzw. den Stellkolben voneinander getrennten hydraulischen Arbeitskammern werden - von einem Steuerventil mit Steuerschieber in Abhängigkeit z. B. vom Lenkwinkel, der Fahrgeschwindigkeit, der Seitenquerkraft oder der Aufbauneigung gesteuert - aus einem hydraulischen Druckspeicher gespeist, der seinerseits von einer Hydraulikpumpe gespeist bzw. aufgeladen wird.

Der Erfindung liegt nun die Aufgabe zugrunde, eine weitere hydraulische Stelleinrichtung zur Erzeugung einer nach Richtung und Größe steuerbaren Stellkraft der im Oberbegriff des Patentanspruchs 1 genannten Art zu schaffen, welche im Rahmen einer Kraftfahrzeugradaufhängung zur Beeinflussung des Dämpfungs- und/oder Federungsverhaltens des Fahrzeugs und/oder zur Beeinflussung der Neigung des Fahrzeugaufbaus z. B. bei Kurvenfahrten (Wank- oder Rollbewegungen) oder beim Verzögern und Beschleunigen des Fahrzeugs (Nick- oder Tauchbewgungen) geeignet ist und im Vergleich zu herkömmlichen Anordnungen bei vergleichsweise geringer Verlustleistung einen höheren Fahrkomfort ermöglicht.

Diese Aufgabe wird erfindungsgemäß durch die Merkmale des Patentanspruchs 1 gelöst.

Vorteilhafte Ausgestaltungen und Weiterbildungen der Erfindung sind in den Unteransprüchen angegeben.

Erfindungsgemäß wird also der die Arbeitskammern des hydraulischen Zweirichtungs-Stellgliedes miteinander verbindende Hydraulikkreis als offener Kreis mit ständig fördernder Hydraulikpumpe ausgebildet und die steuerbare Ventileinrichtung durch steuerbare Drosselventile gebildet, deren Durchflußquerschnitte den jeweiligen Betriebserfordernissen entsprechend jeweils zwischen einem von Null verschiedenen Mindestwert und einem Höchstwert verstellbar sind.

Die erfindungsgemäße hydraulische Stelleinrichtung zeichnet sich insbesondere dadurch aus, daß Fahrbahnstöße im Gegensatz zu solchen Anordnungen mit geschlossenem Hydraulikkreis und nur ein- und ausschaltbaren Sperrventilen nicht komfortmindernd voll auf den Fahrzeugaufbau übertragen, sondern über die Drosselventile des offenen Hydraulikkreises abgebaut werden. Darüber hinaus ist der bauliche Aufwand vergleichsweise gering, weil für den Hydraulikkreis ein Hochdruckspeicher nicht benötigt wird.

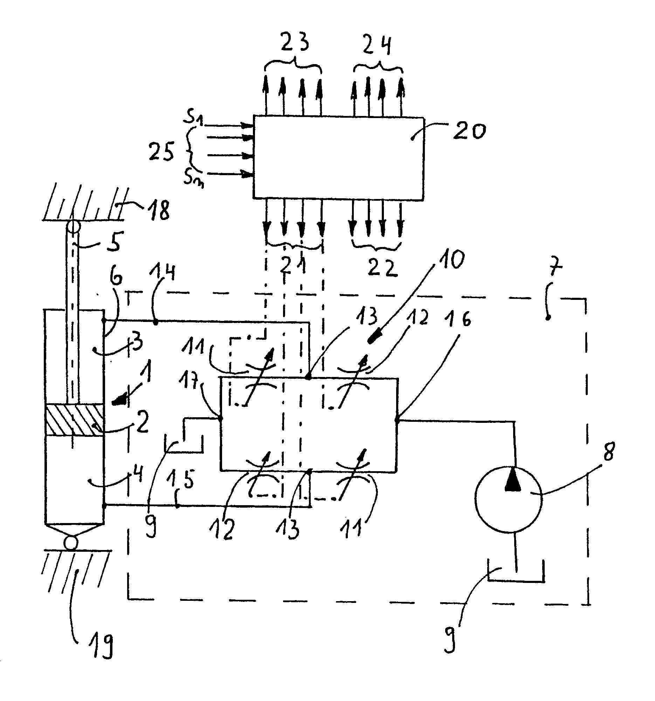

Anhand eines in der Zeichnung dargestellten Ausführungsbeispiels wird die Erfindung nachstehend näher erläutert.

Die einzige Figur der Zeichnung zeigt in prinzipienhafter Darstellung ein z. B. zwischen dem nicht weiter dargestellten Fahrzeugaufbau 18 eines Kraftfahrzeugs und einem der ebenfalls nicht weiter dargestellten Radführungsglieder oder Radträger 19 der Fahrzeugräder wirksames hydraulisches Zweirichtungs-Stellglied 1 in Form eines Stellzylinders mit axial verschieblichem, d. h. lineare Stellbewegungen durchführenden Stellkolben 2, durch den zwei benachbarte hydraulikgefüllte Arbeitskammern 3, 4 des Stellzylinders voneinander getrennt sind. Im Ausführungsbeispiel ist das freie Ende der Kolbenstange 5 des Stellkolbens 2 am Fahrzeugaufbau 18 und das Zylindergehäuse 6 des Stellzylinders am Radführungsglied 19 angelenkt; natürlich ist es auch möglich, die Kolbenstange am Radführungsglied bzw. Radträger und das Zylindergehäuse am Fahrzeugaufbau angreifen zu lassen.

Die beiden Arbeitskammern 3, 4 des Stellzylinders sind miteinander durch einen Hydraulikkreis 7 verbunden, welche eine Hydraulikpumpe 8, einen drucklosen Hydrauliktank 9 und eine steuerbare Ventileinrichtung 10 aufweist, durch deren Aussteuerung die vom Stellzylinder 1 abgegebene Stellkraft nach Richtung und Größe gesteuert werden kann, um z. B. betriebsmäßig auftretenden und aus verschiedensten Gründen oft als störend oder unangenehm empfundenen Aufbaubewegungen entgegenzuwirken, wie sie beispielsweise beim Durchfahren von Kurven als Wank- oder Rollbewegungen oder beim Bremsen oder Beschleunigen des Fahrzeugs als Nick- bzw. Tauchbewegungen auftreten können. Es versteht sich, daß hierzu jedem der vier Fahrzeugräder ein solches hydraulisches Zweirichtungs-Stellglied 1 zugeordnet sein muß.

Der Hydraulikkreis 7 ist als offener Kreis mit ständig fördernder Hydraulikpumpe 8 ausgebildet.

Die steuerbare Ventileinrichtung 10 ihrerseits weist keine nur ein- und ausschaltbare Sperrventile, sondern steuerbare Drosselventile 11, 12 auf, deren Durchflußquerschnitte jeweils zwischen einem von Null verschiedenen Mindestwert und einem Höchstwert verstellbar sind. Die Ventileinrichtung enthält vier brückenförmig zusammengeschaltete steuerbare Drosselventile 11, 12. An den beiden Eckpunkten 13 der einen Brückendiagonale sind jeweils Hydraulikleitungen 14, 15 angeschlossen, welche mit den beiden Arbeitskammern 3, 4 des hydraulischen Zweirichtungs-Stellzylinders verbunden sind. Von den beiden Eckpunkten der anderen Brückendiagonale ist der eine Eckpunkt 16 leitungsmäßig mit der Hydraulikpumpe 8 und der andere Eckpunkt 17 mit dem drucklosen Hydrauliktank 9 verbunden.

Die in der Brückenanordnung einander jeweils diagonal gegenüberliegenden Drosselventile, d. h. die beiden Drosselventile 11 einerseits und die beiden Drosselventile 12 andererseits werden jeweils gleichsinnig ausgesteuert.

Solange alle vier Drosselventile 11, 12 gleich weit aufgesteuert sind, d. h. mit dem gleichen Durchflußquerschnitt betrieben werden, baut sich zwischen den beiden Eckpunkten 13 der mit den beiden Arbeitskammern 3, 4 verbundenen Brückendiagonale keine Druckdifferenz auf, was bei gleich großen wirksamen Kolbenflächen bedeuten würde, daß dann vom Stellglied 1 auch keine Stellkraft abgegeben wird. Da wegen der durch die Arbeitskammer 3 verlaufenden Kolbenstange 5 tatsächlich jedoch nicht gleich große Kolbenflächen wirksam sind, muß dies bei der Aussteuerung der Drosselventile entsprechend Berücksichtigung finden.

Bei normaler Geradeausfahrt des Fahrzeugs, wenn dieses also weder kräftig beschleunigt noch gebremst wird und demzufolge der Aufbau keine als störend empfundene Bewegungen durchführt, werden keine kompensierenden Stellkräfte benötigt. Die Drosselventile 11, 12 der steuerbaren Ventileinrichtung 10 werden daher in einer solchen Betriebsphase ungedrosselt, also mit ihrem maximalen Durchflußquerschnitt betrieben, so daß die Hydraulikpumpe 8 lediglich im Leerlauf, also mit geringer Antriebsleistung arbeitet; bei Geradeausfahrt verursacht die hydraulische Stelleinrichtung daher nur geringe Verlustleistungen. Durch den auf unebenen Straßen beim Ein- und Ausfedern der Räder ein- und austauchenden Stellkolben 2 aus den Arbeitskammern 3 bzw. 4 verdrängte Hydraulikflüssigkeit kann somit jeweils weitgehend ungedrosselt abfließen.

Wenn vom Stellglied 1 nun betriebsmäßig auftretenden Aufbaubewegungen entgegenwirkende Stellkräfte erzeugt werden sollen, z. B. beim Bremsen oder Beschleunigen auftretende Nickbewegungen etc. oder bei Kurvenfahrten auftretende Wank- bzw. Rollbewegungen, dann wird die steuerbare Ventileinrichtung 10 durch die nur prinzipienhaft angedeutete elektronische Steuer- und Regeleinrichtung 20 durch "Androsseln", d. h. Verringern des Durchflußquerschnitts jeweils zweier einander diagonal gegenüberliegender Drosselventile derart ausgesteuert, daß der Stellkolben 2 mit einem nach Größe und Richtung der zu erzeugenden Stellkraft entsprechenden Druck beaufschlagt wird. Je nach Richtung der zu erzeugenden Stellkraft werden also entweder die diagonal gegenüberliegenden Drosselventile 11 oder die Drosselventile 12 "angedrosselt", wobei der Durchflußquerschnitt dieser Drosselventile umso stärker gedrosselt wird, je größer die zu erzeugende Stellkraft ist. Die Aussteuerung der vier Drosselventile ist durch die von der elektronischen Steuer- und Regeleinheit 20 kommenden strichlierten Steuerleitungen angedeutet.

Es ist leicht erkennbar, daß auf diese Weise den jeweiligen Regelerfordernissen entsprechend sehr schnell und feinfühlig Stellkräfte der jeweils benötigten Größe und Richtung erzeugt werden können.

Um die betriebsmäßig auftretenden Aufbaubewegungen in gewünschter Weise beeinflussen zu können, insbesondere um z. B. auftretenden Wank- und/oder Nickbewegungen entgegenwirken zu können, müssen die Stellkräfte der den einzelnen Fahrzeugrädern zugeordneten Zweirichtungs-Stellglieder 1 natürlich durch die elektronische Steuer- und Regeleinheit 20 in geeigneter, dem Fachmann vertrauter Weise richtungs- und größenmäßig aufeinander abgestimmt werden. Die elektronische Steuer- und Regeleinheit 20 besitzt daher neben den Steuersignalausgängen 21 für die dargestellte Ventileinrichtung 10 entsprechende weitere Steuerleitungsausgänge 22 bis 24; angedeutet sind darüber hinaus Signaleingänge 25, über welche der Steuer- und Regeleinheit von Sensoren erzeugte Signale $S_1$ bis $S_n$ zugeführt sind, auf deren Basis die Steuer- und Regeleinheit 20 die Steuersignale für die steuerbaren Ventileinrichtungen erzeugt. Durch Sensoren erfaßt und von der elektronischen Steuer- und Regeleinheit 20 ausgewertet werden können grundsätzlich alle für eine solche Steuerung bzw. Regelung aussagekräftige Betriebsparameter des Fahrzeugs, beispielsweise die Aufbauneigungen bzw. -bewegungen selbst, die Fahrzeugquerbeschleunigungen oder die Fahrzeuglängsbeschleunigung etc.

Wenn nun bei "angedrosselten" Drosselventilen, d. h. bei aktiviertem Stellglied 1 unebene Straßen befahren werden, dann werden diese Fahrbahnstöße im Gegensatz zu bekannten Systemen mit geschlossenen Hydraulikkreisen nicht voll in den Fahrzeugaufbau geleitet, sondern weitgehend abgebaut, weil der Stellkolben 2 aus den Arbeitskammern 3 bzw. 4 Hydraulikflüssigkeit über die hier nicht gesperrte, sondern nur mehr oder weniger stark "angedrosselte" Ventileinrichtung 10 verdrängen kann.

Da störende bzw. auszuregelnde Aufbaubewegungen im allgemeinen durch die Sensoranordnungen sehr früh erkannt werden und die steuerbaren Ventileinrichtungen zwecks Erzeugung entgegenwirkender Stellkräfte durch die elektronische Steuer- und Regeleinheit 20 so schnell "angedrosselt" werden, daß es kaum mehr zu einer spürbaren Aufbauneigung kommt, wird dabei jeweils auch nur wenig Hydraulikflüssigkeit aus den Arbeitskammern 3, 4 verdrängt. Lediglich die auf unebenen Fahrbahnen stattfindenden Relativbewegungen zwischen Rad und Aufbau und damit zwischen Stellkolben 2 und Zylinder 6 bewirken, daß eine vergleichsweise geringe Menge an Hydraulikflüssigkeit aus den Arbeitskammern 3, 4 verdrängt wird, die dann vom Hydrauliksystem, d. h. letztlich von der Hydraulikpumpe 8 wieder zur Verfügung gestellt werden muß.

Aufbaubewegungen, insbesondere Wank- und/oder Nickbewegungen, erfolgen im Vergleich zu fahrbahnbedingten Radbewegungen langsam, nämlich nur mit etwa 2 bis 3 Hz. Als steuerbare Ventileinrichtungen 10 werden also nur vergleichsweise langsame und daher preisgünstige Bauelemente erforderlich, was auch für die Bauelemente zur Erfassung der relevanten Betriebsparameter sowie für die Steuer- und Regeleinheit 20 gilt.

Die im Zusammenhang mit den im Vergleich zu den Aufbaubewegungen höherfrequenteren fahrbahnbedingten Radbewegungen stehenden Systemreaktionen erfolgen bei der erfindungsgemäßen hydraulischen Stelleinrichtung ohne irgendwelche Steuereingriffe selbsttätig, indem Hydraulikflüssigkeit aus den Arbeitskammern 3 bzw. 4 über die nur angedrosselte Ventileinrichtung 10 verdrängt wird. Bei klassischen Aktivfederungen würden dagegen die dort verwendeten ein- und ausschaltbaren Ventile entsprechend dem vergleichsweise schnellen Ein- und Ausfedern der Räder (15 bis 20 Hz) von der Steuereinrichtung ständig ein-und ausgeschaltet werden müssen. Bei den bekannten Stellgliedern mit geschlossenem Hydraulikkreis, bei denen die ein- und ausschaltbaren Sperrventile beim Auftreten von Fahrbahnstörungen nicht umgeschaltet werden, würden demgegenüber die Fahrbahnstöße jeweils voll auf den Aufbau übertragen werden.

Das in der Zeichnung dargestellte Ausführungsbeispiel zeigt ein hydraulisches Zweirichtuns-Stellglied 1 in Form eines Stellzylinders mit axial verschieblichem, d. h. lineare Stellbewegungen durchführendem Stellkolben 2.

Ein solcher Stellzylinder kann abweichend von den obigen Erläuterungen nicht nur in der Weise zur Erzeugung von betriebsmäßig auftretenden Aufbaubewegungen eines Kraftfahrzeugs entgegenwirkenden Stellkräften eingesetzt werden, daß jeweils jedem der Fahrzeugräder ein solcher Stellzylinder zugeordnet wird, der unmittelbar zwischen Fahrzeugaufbau und Radführungsglied wirksam ist, sondern auch in der Weise, daß seine Stellkraft über eine U-Form-Stabilisatoranordnung zur Wirkung gebracht wird, z. B. in der Weise, daß die Anlenkung eines oder beider abgewinkelter Stabilisatorarme jeweils unter Zwischenschaltung eines solchen Stellzylinders erfolgt, oder aber in der Weise, daß ein solcher Stellzylinder zwischen den beiden Drehstabteilen eines etwa mittig aufgetrennten Torsionsstabes angeordnet wird, um diese beiden Drehstabteile gegeneinander zu verdrehen, wie dies beispielsweise grundsätzlich aus der eingangs zitierten DE-PS 11 05 290 bekannt ist.

Abweichend vom dargestellen Ausführungsbeispiel kann das hydraulische Zweirichtungs-Stellglied auch als nach Art einer Drehkolbenpumpe aufgebauter Stellmotor ausgebildet sein, wie er prinzipienhaft ebenfalls aus der DE-PS 11 05 290 sowie der DE-PS 11 75 093 bekannt ist.

Die erfindungsgemäße hydraulische Stelleinrichtung eignet sich auch bestens dazu, das Eigenlenkverhalten des Kraftfahrzeuges in einer gewünschten Weise zu beeinflussen.

Das kann z. B. dadurch geschehen, daß die zum Entgegenwirken von Wank- bzw. Rollbewegungen des Kraftfahrzeugs erzeugten Stellkräfte in einem veränderbaren - je nach Fahrsituation unterschiedlich großem - Verhältnis auf die Vorderachse einerseits und die Hinterachse andererseits verteilt werden. Durch Variation des Verhältnisses, mit dem sich die Vorderachse und die Hinterachse an der Rollmomentabstützung beteiligen, kann das Eigenlenkverhalten in einfacher Weise je nach Erfordernis z. B. stärker in Richtung eines Untersteuerns oder auch mehr in Richtung eines Übersteuerns verändert werden, um z. B. ein an sich vorhandenes übersteuerndes oder aber auch ein vorhandenes untersteuerndes Verhalten mehr oder weniger stark abzubauen oder aber - in einer anderen Fahrsituation - zu verstärken.

## Ansprüche

1. Hydraulische Stelleinrichtung zur Erzeugung einer nach Richtung und Größe steuerbaren Stellkraft, enthaltend
a) ein hydraulisches Zweirichtungs-Stellglied (1) mit einem beidseitig druckbeaufschlagbaren, hydraulische Arbeitskammern (3, 4) voneinander trennenden verschieblichen Stellkolben (2) sowie
b) einen die Arbeitskammern miteinander verbindenden und Stellrichtung sowie Stellkraft des Stellkolbens (2) steuernden Hydraulikkreis (7) mit Hydraulikpumpe (8), Hydrauliktank (9) und steuerbarer Ventileinrichtung (10),
dadurch gekennzeichnet, daß der Hydraulikkreis (7) als offener Kreis mit ständig fördernder Hydraulikpumpe (8) ausgebildet ist,
und daß die steuerbare Ventileinrichtung (10) steuerbare Drosselventile (11, 12) aufweist, deren Durchflußquerschnitte jeweils zwischen einem von Null verschiedenen Mindestwert und einem Höchstwert verstellbar sind.

2. Hydraulische Stelleinrichtung nach Anspruch 1, dadurch gekennzeichnet, daß die steuerbare Ventileinrichtung (10) vier brückenförmig zusammengeschaltete steuerbare Drosselventile (11, 12) aufweist,
daß an den Eckpunkten (13) der einen Brückendiagonale jeweils eine mit einer der beiden Arbeitskammern (3, 4) verbundene Hydraulikleitung (14, 15) angeschlossen ist,
und daß an dem einen Eckpunkt (16) der anderen Brückendiago nale die Hydraulikpumpe (8) und an dem anderen Eckpunkt (17) dieser Brückendiagonale der Hydrauliktank (9) angeschlossen ist.

3. Hydraulische Stelleinrichtung nach Anspruch 1 oder 2,
dadurch gekennzeichnet, daß das hydraulische Zweirichtungs-Stellglied (1) als Stellzylinder mit axial verschieblichem Stellkolben (2) ausgebildet ist.

4. Hydraulische Stelleinrichtung nach Anspruch 1 oder 2,
dadurch gekennzeichnet, daß das hydraulische Zweirichtungs-Stellglied als nach Art einer Drehkolbenpumpe aufgebauter Stellmotor ausgebildet ist.

5. Hydraulische Stelleinrichtung nach Anspruch 3 oder 4,
gekennzeichnet durch ihre Verwendung im Rahmen einer zwischen Aufbau und Radführungsgliedern (Lenkern) oder Radträgern (Achsschenkeln) eines Kraftfahrzeugs wirksamen Stelleinrichtung zur Erzeugung von betriebsmäßig auftretenden Aufbaubewegungen, insbesondere z. B. Wank- und/oder Nickbewegungen, entgegenwirkenden Stellkräften.

6. Hydraulische Stelleinrichtung nach Anspruch 5, dadurch gekennzeichnet, daß die Verteilung der den Wank-bzw. Rollbewegungen entgegenwirkenden Stellkräfte auf die Vorder- und auf die Hinterachse zwecks Beeinflussung des Eigenlenkverhaltens des Kraftfahrzeuges fahrsituationsabhängig, z. B. in Abhängigkeit von der Fahrgeschwindigkeit veränderbar ist.

7. Hydraulische Stelleinrichtung nach Anspruch 6, dadurch gekennzeichnet, daß der Anteil der an der Vorderachse zur Wirkung gebrachten Stellkräfte an der Wank- bzw. Rollmomentabstützung mit zunehmender Fahrgeschwindigkeit vergrößert wird.